# EUROPÄISCHE PATENTSCHRIFT

(11) **EP 2 017 441 B1**
(45) Veröffentlichungstag und Bekanntmachung des Hinweises auf die Patenterteilung: **20.07.2011**
(21) Anmeldenummer: 08009166.3
(22) Anmeldetag: 17.05.2008
(51) Int. Cl.: F01N 3/08, F01N 3/28, F01N 13/04

(54) **Abgasanlage mit zwei parallel abgeordneten Schalldämpfern**
Exhaust gas system comprising two parallel arranged dampers
Système de gaz d'échappement comprenant deux silencieux en schéma parallèle

(30) Priorität: 04.06.2007 AT 8792007
(43) Veröffentlichungstag der Anmeldung: 21.01.2009
(73) Patentinhaber: MAN Nutzfahrzeuge Österreich AG, 1230 Wien (AT)
(72) Erfinder: Ribo, Franz, Ing., 1220 Wien (AT); Prelipceanu, Dan Valentin, 1100 Wien (AT); Zwerenz, Fritz, Ing., 2604 Theresienfeld (AT)

(56) Entgegenhaltungen:
- EP-A- 0 556 846
- EP-A- 0 558 951
- DE-A1- 19 743 446
- JP-A- 60 212 610
- US-A1- 2006 286 877

## Beschreibung

Gegenstand der Erfindung ist ein Nutzfahrzeug mit einer Abgasanlage mit wenigstens zwei Schalldämpfern entsprechend dem Oberbegriff des Anspruchs 1.

Heutige Abgasanlagen sehen vielfach je einen Vorschalldämpfer und einen Hauptschalldämpfer vor, die seriell hintereinander geschaltet sind. Aus DE 10 2005 056 423 ist die Abgasführung bei einem Nutzfahrzeug mit einer Brennkraftmaschine mit V-förmig angeordneten Zylinderbänken bekannt. Die Abgaskanäle jeweils einer Zylinderbank münden in ein gemeinsames Abgassammelrohr ein. Die Brennkraftmaschine ist zusammen mit einem an die Brennkraftmaschine angeflanschten Getriebe, zwischen zwei Längsholmen eines Fahrgestellrahmens eines Nutzfahrzeuges angeordnet.

Die oberhalb des Fahrgestellrahmens liegenden Abgassammelrohre sind über jeweils eine Turbine eines Abgasturboladers mit Abgasrohren verbunden, die jeweils zwischen den Längsholmen und dem an die Brennkraftmaschine angeflantschten Getriebe hindurch nach unten führen und in einen unterhalb der Längsholme angeordneten Vorscttalldämpfer münden, in den der Hydrolysekatalysator und wenigstens ein Oxidationskatalysator integriert sind. Stromab folgt ein Hauptschalldämpfer mit wenigstens einem integrierten SCR-Katalysator.

Bei den üblichen Konstruktionen müssen die Abgasanlagen für jeden Nutzfahrzeugtyp neu entwickelt und die einzelnen Komponenten an die jeweiligen Gegebenheiten des Fahrzeugtyps angepasst werden. Wünschenswert wäre es bei der Konzeption eines neuen Nutzfahrzeugtyps auf bestehende Systeme und Komponente zurückgreifen zu können.

Aus der JP 60 212 610 A ist ein Aufbau eines Schalldämpfers einer Abgasanlage bekannt, bei der das Schalldämpfervolumen auf zwei Teilschalldämpfer aufgeteilt ist, denen auf einer ersten Stirnseite der Schalldämpferanordnung über ein Verteilerrohr Abgas von der Brennkraftmaschine zugeführt wird. Auf der gegenüberliegenden Stirnseite der Schalldämpferanordnung ist ein weiteres Verteilerrohr vorgesehen, Ober das die Abgase zu einer gemeinsamen Abführleitung geführt werden. Mit einer derartigen Parallelanordnung von Schalldämpfern soll die Bauhöhe der Schalldämpferanordnung reduziert werden, um die Schalldämpfer auch unter Einbaubedingungen verbauen zu können, die hinsichtlich der Einbauhöhe beschränkt sind. Die gesamte Baulänge der Schalldämpferanordnung ist aber nach wie vor relativ lang, was unter Umständen bei in Längsrichtung begrenztem Einbauraum für die Schalldämpferanordnung zu Einbauproblemen führen kann.

Weiter ist aus der EP 0 556 846 A1 ein einzelner Schalldämpfer bekannt, bei dem an einer Stirnseite ein Gaseintrittsrohr und ein Gasaustrittsrohr angeordnet ist.

Demgegenüber ist es Aufgabe der vorliegenden Erfindung, ein Nutzfahrzeug mit einer Brennkraftmaschine mit angeschlossener Abgasanlage zur Verfügung zu stellen, bei der die Schalldämpferanordnung nicht nur hinsichtlich der Einbauhöhe sondern auch hinsichtlich der Einbaulänge kompakt ausgebildet ist und somit insgesamt eine kleinbauende Schalldämpferanlage mit in Teilschalldämpfer integrierten Abgasnachbehandlungsvorrichtungen zur Verfügung gestellt wird.

Die Aufgabe wird erfindungsgemäß durch die Merkmale des Anspruchs 1 gelöst.
Die Teilschalldämpfer sind als Hauptschalldämpfer ausgelegt. Im Weiteren wird von zwei Teilschalldämpfern ausgegangen, denen jeweils weitere Nachschalldämpfer angegliedert werden können. Die Teilschalldämpfer können dabei parallel übereinander oder nebeneinander angeordnet werden. Zur platzsparenden Anordnung ist nach Maßgabe der Erfindung nur noch eine Zuleitung und eine Ableitung für die vorhandenen Teilschalldämpfer erforderlich. Hierdurch können die Herstellungskosten der Abgasanlage spürbar gesenkt werden. Ein Austausch bzw. die Wartung der Abgasanlage ist einfacher durchführbar. Zwei oder mehrere Teilschalldämpfer können je nach der Abgasmenge und in Abgängigkeit des Reinigungserfordemisses miteinander kombiniert werden. Hierbei kann bei der Neukonzeption des Nutzfahrzeugs bzw. bei der Wartung auf bekannte Standartteilschalldärnpfer zurückgegriffen werden. Vorteilhaft ist, dass angesichts der lediglich jeweils einen erforderlichen Zuleitung bzw. Ableitung die erforderliche Hitzeabschirmung gegenüber benachbarter Bauteile und Aggregate deutlich reduziert werden kann. Zur Anbindung mehreren Teilschalldämpfer an die Zu- bzw. die Ableitung werden wenigstens zwei Verteiler eingesetzt. Die Erfindung ermöglicht den Einsatz mehrerer Gruppen von Abgasanlagen mit wenigstens jeweils zwei Teilschalldämpfern. Ein Rückgriff auf bekannte Serienbauteile für Fahrzeuge und Motoren unterschiedlicher Größe und Abgasausstoß begünstigt die Reduktion der Herstellungskosten des jeweiligen Nutzfahrzeugs.

Erfindungsgemäß sind der die Zuleitung mit dem Teilschalldämpfer verbindende Verteiler und der den Teilschalldämpfer mit der Ableitung verbindende Verteiler gleichachsig an derselben Stirnwand des jeweiligen Teilschalldämpfers angeordnet.

Nach einer weiteren Ausführungsform der Erfindung sind die Teilschalldämpfer identisch ausgebildet.

Nach einer weiteren Ausführungsform der Erfindung sind die Teilschalldämpfer unterschiedlich ausgebildet. Auf diese Weise können im Reparaturfall genormte Teilschalldämpfer unterschiedlicher Größe und unterschiedlichen Volumens ausgetauscht werden.

Nachstehend ist die Erfindung anhand mehrerer in der Zeichnung dargestellter Ausführungsbeispiele näher erläutert. Hierbei zeigen:
- Fig.1: die erfindungsgemäße Abgasanlage mit Zu- und Ableitung,
- Fig. 2: die Schalldämpfer mit je einem Verteiler und
- Fig. 3: einen Verteiler der Abgasanlage.

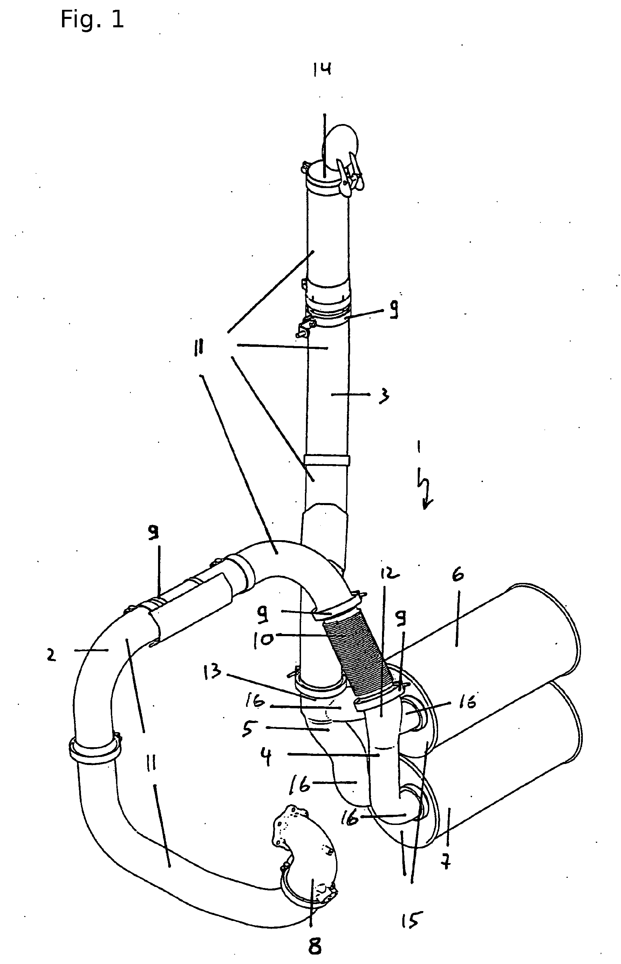

Fig. 1 zeigt in Draufsicht die Abgasanlage 1 mit einer Zuleitung 2 und einer Ableitung 3. Die Zuleitung 2 und die Ableitung 3 sind über Verteiler 4 und 5 mit den Teilschalldämpfern 6 und 7 verbunden.

Die Zuführung des Abgases zu den Teilschalldämpfern 6 und 7 erfolgt motorseitig über die Zuleitung 2, die mit einem Flansch 8 am Motor (nicht gezeigt) angeordnet ist. Die Abgase werden den beiden Teilschalldämpfern 6,7 über die Zuleitung 2 zugeführt. Die Zuleitung 2 und die Ableitung 3 können aus starren Metallrohren bestehen, die entweder einstückig sind oder aus mehreren durch Profilschellen 9 mit einander verbundenen Einzelstücken 11. Denkbar ist, zur Erhöhung der Flexibilität der Zu- und Ableitung 2 und 3 flexible Zwischenstücke 10 zu verwenden, die beispielhaft aus einem biegsamen Metallschlauch bestehen. Die Verteiler 4 bzw. 5 weisen gegenüber der Zuleitung 2 bzw. der Ableitung 3 je einen Eingang 12 bzw. einen Ausgang 13 auf. Die Verteiler 4; 5 ermöglichen durch Einmündungen 16 den Eintritt des Abgases in die Teilschalldämpfer 6; 7 bzw. den Austritt des gereinigten Abgases aus den Teilschalldämpfern 6; 7 in die Ableitung 3. Jeder Verteiler 4,5 ist dabei mit Hilfe von Profilschellen 9 an den Teilschalldämpfern 6,7 befestigt.

In der Fig. 1 sind die Teilschalldämpfer 6 und 7 senkrecht übereinander angeordnet. Die Teilschalldämpfer 6 und 7 können in oder entgegen der Fahrtrichtung oder quer zu dieser angeordnet sein. Die Teilschalldämpfer 6, 7 werden dabei in Fig. 1 zur Reinigung des Abgases von diesem in paralleler Richtung durchströmt. Erkennbar wird dies in Fig. 1 daran, dass die Zuleitung 2 und die Ableitung 3 mit den Einmündungen 16 an derselben Stirnwand 15 des jeweiligen Teilschalldämpfers 6 bzw. 7 angeordnet sind. An der Auspufföffnung 14 wird das gereinigte Abgas in die Atmosphäre freigesetzt.

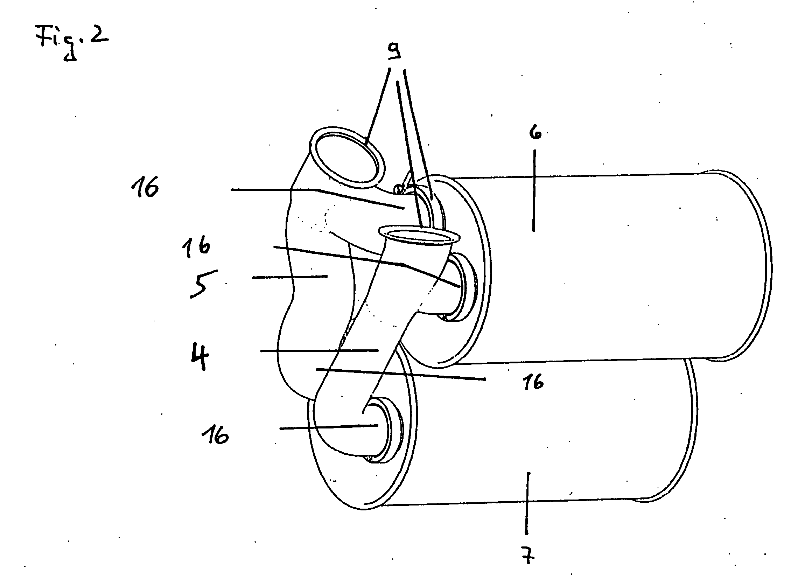

Fig. 2 zeigt zwei übereinander angeordnete Teilschalldämpfer 6 und 7 entsprechend Fig. 1. Zur gasdichten Verbindung mit der Zuleitung 2 bzw. der Ableitung 3 (jeweils nicht gezeigt) weisen die Verteiler 4 bzw. 5 Profilschellen 9 auf. Je nach Größe und Volumen der Teilschalldämpfer 6 und 7 können Verteiler 4; 5 Einmündungen 16 mit unterschiedlichen Durchmessern aufweisen. Über die Einmündungen 16 gelangen die Abgase von der Zuleitung 2 in die Teilschalldämpfer 6 und 7 bzw. aus den Teilschalldämpfern 6 und 7 in die Ableitung 3 (jeweils nicht gezeigt).

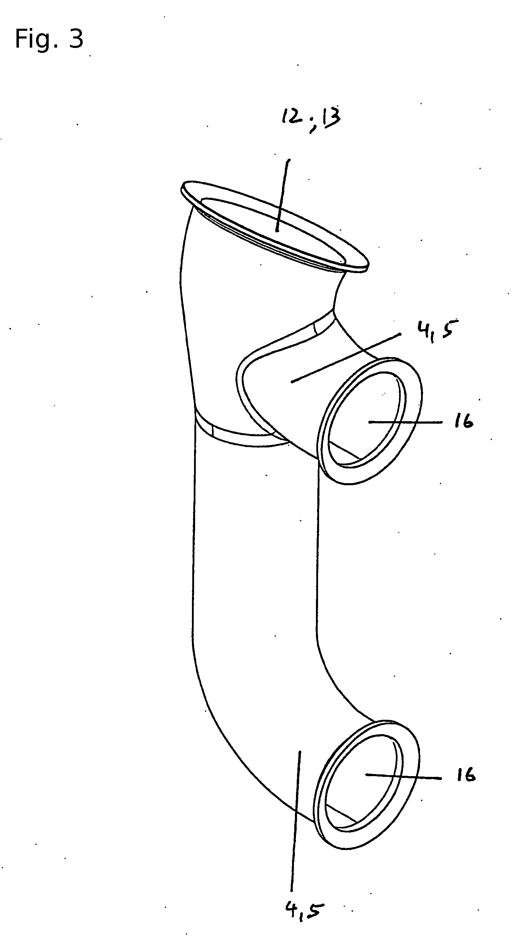

Fig. 3 zeigt, dass der Verteiler 4; 5 entsprechend den Fig. 1 und 2 am Eingang 12 bzw. am Ausgang 13 in die Zuleitung 2 bzw. die Ableitung 3 (jeweils nicht gezeigt). übergeht. Mit den Bezugsziffern 16 sind die Einmündungen der Verteiler 4; 5 in die Teilschalldämpfer 6; 7 dargestellt.

### Bezugsziffern

- 1: Abgasanlage
- 2: Zuleitung
- 3: Ableitung
- 4: Verteiler (Zuleitung)
- 5: Verteiler (Ableitung)
- 6: Teilschalldämpfer
- 7: Teilschalldämpfer
- 8: Flansch/Motor
- 9: ProFlschellen
- 10: Zwischenstück
- 11: Einzelstücke
- 12: Eingang
- 13: Ausgang
- 14: Auspufföffnung
- 15: Stirnwand
- 16: Einmündung

## Patentansprüche

1. Nutzfahrzeug mit einer Brennkraftmaschine mit angeschlossener Abgasanlage (1), die einen Schalldämpfer und eine der Nachbehandlung des Abgases dienende, in den Schalldämpfer integrierte Abgasnachbehandlungsvorrichtung umfasst und bei der das motorseitige Abgas dem Schalldämpfer über eine Zuleitung (2) zugeführt und das gereinigte Abgas über eine Ableitung (3) abgeführt wird, wobei der Schalldämpfer in zwei Teilschalldämpfer (6;7) unterteilt ist, die parallel zueinander angeordnet sind und über je einen angeflanschten Verteiler (4;5) mit der Zuleitung (2) und mit der Ableitung (3) verbunden sind und die je eine Abgasnachbehandlungsvorrichtung aufweisen, **dadurch gekennzeichnet, dass** der die Zuleitung (2) mit dem Teilschalldämpfer (6; 7) verbindende Verteiler (4) und der den Teilschalldämpfer (6;7) mit der Ableitung (3) verbindende Verteiler (5) gleichachsig an derselben Stirnwand der Teilschalldämpfer (6;7) angeordnet sind.

2. Nutzfahrzeuge nach Anspruch 1, **dadurch gekennzeichnet, dass** die Teilschalldämpfer (6; 7) identisch ausgebildet sind.

3. Nutzfahrzeuge nach Anspruch 1, **dadurch gekennzeichnet, dass** die Teilschalldämpfer (6; 7) unterschiedlich ausgebildet sind.

## Claims

1. Commercial vehicle with an internal combustion engine with connected exhaust gas system (1), including a damper with an exhaust gas aftertreatment unit built into the damper and used to treat the exhaust gas, in which exhaust gas system the exhaust gas from the engine is routed to the damper via an intake pipe (2) and the cleaned exhaust gas is discharged though an outlet pipe (3), whereby the damper is split into two sub-dampers (6,7) arranged in parallel, with each sub-damper connected via a flanged distributor pipe (4,5) to the intake (2) and the outlet (3), and each sub-damper is fitted with an exhaust gas aftertreatment unit, **characterised in that** the distributor pipe (4) connecting the intake (2) to the sub-damper (6,7) and the distributor pipe (5) connecting the sub-damper (6,7) to the outlet (3) are arranged co-axially on the same front wall of the sub-dampers (6,7).

2. Commercial vehicles in accordance with claim 1, **characterised in that** the sub-dampers (6,7) are of identical design.

3. Commercial vehicles in accordance with claim 1 **characterised in that** the sub-dampers (6,7) are of differing design.

## Revendications

1. Véhicule industriel avec un moteur à combustion interne avec système d'échappement raccordé (1), qui comprend un silencieux et un dispositif de posttraitement des gaz d'échappement servant au posttraitement des gaz d'échappement et intégré dans le silencieux, pour lequel le gaz d'échappement côté moteur est introduit dans le silencieux par une conduite d'amenée (2) et le gaz d'échappement nettoyé est évacué par une conduite d'évacuation (3), le silencieux étant divisé en deux silencieux partiels (6, 7), qui sont disposés parallèlement l'un à l'autre et reliés chacun par un tuyau distributeur bridé (4, 5) avec la conduite d'amenée (2) et avec la conduite d'évacuation (3) et qui présentent chacun un dispositif de posttraitement des gaz d'échappement, **caractérisé en ce que** le tuyau distributeur (4) reliant la conduite d'amenée (2) avec le silencieux partiel (6 ; 7) et le tuyau distributeur (5) reliant le silencieux partiel (6 ; 7) avec la conduite d'évacuation (3) sont disposés de manière équiaxe sur la même paroi frontale des silencieux partiels (6 ; 7).

2. Véhicules industriels selon la revendication 1, **caractérisés en ce que** les silencieux partiels (6 ; 7) sont conçus de manière identique.

3. Véhicules industriels selon la revendication 1, **caractérisés en ce que** les silencieux partiels (6 ; 7) sont conçus de manière différente.
